# EUROPÄISCHE PATENTSCHRIFT

(11) **EP 3 555 210 B1**
(45) Veröffentlichungstag und Bekanntmachung des Hinweises auf die Patenterteilung: **16.12.2020**
(21) Anmeldenummer: 17821570.3
(22) Anmeldetag: 18.12.2017
(51) Int. Cl.: C08L 69/00, C08L 51/06

(54) **THERMOPLASTISCHE ZUSAMMENSETZUNGEN MIT GUTEN MECHANISCHEN EIGENSCHAFTEN**
THERMOPLASTIC COMPOSITIONS WITH GOOD MECHANICAL PROPERTIES
COMPOSITIONS THERMOPLASTIQUES DOTÉES DE BONNES PROPRIÉTÉS MÉCANIQUES

(30) Priorität: 19.12.2016 EP 16204954
(43) Veröffentlichungstag der Anmeldung: 23.10.2019
(73) Patentinhaber: Covestro Intellectual Property GmbH & Co. KG, 51373 Leverkusen (DE)
(72) Erfinder: WANDNER, Derk Erich, 51519 Odenthal (DE)
(74) Vertreter: Levpat
(86) Internationale Anmeldenummer: PCT/EP2017/083366
(87) Internationale Veröffentlichungsnummer: WO 2018/114835

(56) Entgegenhaltungen:
- EP-A1- 2 574 642
- WO-A1-2013/079634

## Beschreibung

Die vorliegende Erfindung betrifft thermoplastische Zusammensetzungen, zur Erzeugung von thermoplastischen Formmassen, ein Verfahren zur Herstellung von thermoplastischen Formmassen, die Formmassen selbst, die Verwendung der Zusammensetzungen oder Formmassen zur Herstellung von Formkörpern und die Formkörper selbst.
Insbesondere betrifft die Erfindung thermoplastische Polycarbonat-Zusammensetzungen.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Durch Variation der Menge und Art der Rezepturbestandteile lassen sich die Zusammensetzungen und damit auch die hergestellten Formkörper in weiten Bereichen hinsichtlich ihrer thermischen, rheologischen und mechanischen Eigenschaften an die Anforderungen der jeweiligen Anwendung anpassen.

Polycarbonat als solches zeichnet sich durch eine sehr gute Wärmeformbeständigkeit und eine hohe Zähigkeit bei Raumtemperatur aus. Zur Verbesserung der Zähigkeit bei tiefen Temperaturen wird Polycarbonat häufig mit polymeren Blendpartnern mit niedrigen Glasübergangstemperaturen als elastische Komponente gemischt.

Als solche Schlagzähmodifikatoren werden beispielsweise Pfropfpolymere mit einer Kern-Schale Struktur aus einem butadienhaltigen Kern und einer Pfropfhülle aus Vinyl(co)polymer eingesetzt, welche eine (Teil)Verträglichkeit des Modifikators mit dem Polycarbonat und eventuell in der Mischung enthaltenen weiteren Polymerkomponenten sicherstellen soll.

So beschreibt EP 0 315 868 A2 die Verwendung von Pfropfpolymerisaten hergestellt aus einem teilchenförmigen Dienkautschuk und einer Pfropfhülle aus Vinylmonomeren in Polycarbonat-Zusammensetzungen. Die Formmassen zeichnen sich durch eine gute Zähigkeit bei tiefen Temperaturen und eine gute Benzinbeständigkeit aus.

WO 2013/045544 A1 offenbart flammgeschützte PC/ABS Zusammensetzungen mit guter Schlagzähigkeit, Fließfähigkeit und Chemikalienbeständigkeit. Die Zusammensetzungen enthalten Polycarbonate, Pfropfpolymerisate und ein kautschukfreies alpha-Olefin-Terpolymer. Die Formmassen eignen sich insbesondere für dünnwandige Gehäuseteile im Elektro- und Elektronikbereich.

US 2015/0353732 A1 offenbart Zusammensetzungen enthaltend Polycarbonat und/oder Polyester, optional Schlagzähmodifikator und Flammschutzmittel sowie einen Verträglichkeitsvermittler mit einem mit Maleinsäureanhydrid funktionalisieren Polyolefin. Durch den Verträglichkeitsvermittler wird eine verbesserte Schlagzähigkeit erreicht.

WO 2013 / 045552 A1 offenbart thermoplastische Formmassen aus Polycarbonat und anorganischen Füllstoffen, die 0,01 bis 0,5 Gew.-Teile mindestens eines anhydrid-modifizierten alpha-Olefin-Terpolymers enthält und einen hohen Grad an Steifigkeit und eine gute Zähigkeit aufweist.

US 2014/0329948 A1 offenbart schlagzähmodifizierte und glasfaserverstärkte Polycarbonat-Zusammensetzungen mit hoher Steifigkeit und guten thermischen und rheologischen Eigenschaften in Verbindung mit guter Flammwidrigkeit. Die Zusammensetzungen enthalten Polycarbonat, Flammschutzmittel, Glasfasern und ein anhydrid-modifizierten alpha-Olefin-Terpolymer.
WO 2015/ 189761 offenbart thermisch leitfähige thermoplastische Zusammensetzungen enthaltend eine Polymermatrix, einen chemisch reaktiven Schlagzähmodifikator und eine thermisch leitfähigen Füllstoff. Als chemisch reaktiver Schlagzähmodifikator wird ein mit Maleinsäureanhydrid gepfropftes Ethylen-Copolymer offenbart. Die Zusammensetzungen zeichnen sich durch gute thermische Leitfähigkeit und Zähigkeit aus.

Die beschriebenen Zusammensetzungen aus dem Stand der Technik zeichnen sich entweder durch eine gute Zähigkeit oder durch eine gute Verarbeitbarkeit aus. Eine zusätzliche Einschränkung besteht in der Chemikalienbeständigkeit von Polycarbonat und schlagzähmodifiziertem Polycarbonat gegenüber verschiedenen Chemikalien und Chemikalienzubereitungen wie zum Beispiel Cremes. Insbesondere Formulierungen mit guter Schmelzefließfähigkeit zeigen eine noch ausgeprägtere Empfindlichkeit gegenüber verschiedenen Chemikalien. Für viele Anwendungen ist es aber vorteilhaft, tieftemperaturzähe Formmassen mit guter Schmelzefließfähigkeit und erhöhter Beständigkeit gegenüber Chemikalien und Chemikalienzubereitungen bereitzustellen, beispielsweise für Dünnwandanwendungen oder komplexe Bauteilgeometrien.

Es war daher wünschenswert, Zusammensetzungen bereitzustellen, die sich aufgrund einer guten Schmelzefließfähigkeit gut verarbeiten lassen und die gleichzeitig auch die Herstellung von Formkörpern mit einer guten Zähigkeit auch bei tiefen Temperaturen ermöglichen. Zusätzlich sollten sich die Zusammensetzungen durch eine deutlich erhöhte Beständigkeit gegenüber verschiedenen Medien sowie einer hohen Wärmeformbeständigkeit auszeichnen.

Es wurde nun überraschenderweise gefunden, dass Zusammensetzungen zur Erzeugung von thermoplastischen Formmassen, wobei die Zusammensetzungen folgende Bestandteile enthalten
A) Mindestens ein Polymer ausgewählt aus der Gruppe bestehend aus aromatischem Polycarbonat, aromatischem Polyestercarbonat oder Polyester
B) mindestens ein mit Anhydrid funktionalisiertes Ethylen-α-Olefin-Copolymer oder Ethylen-α-Olefin Terpolymer,
   wobei die Komponente B ein gewichtsgemitteltes Molekulargewicht Mw von 50000 bis 500000 g/mol, bevorzugt von 10000 bis 400000 g/mol, besonders bevorzugt von 150000 bis 350000 g/mol aufweist,
   die vorteilhaften Eigenschaften zeigen.

Die Zusammensetzungen enthalten bevorzugt
40 bis 99,9 Gew.-%, weiter bevorzugt 60 bis 99,4 Gew.-%, besonders bevorzugt 80 bis 98,8 Gew.-% der Komponente A,
0,1 bis 10 Gew.-%, weiter bevorzugt 0,5 bis 9 Gew.-%, besonders bevorzugt 1 bis 8 Gew.-% der Komponente B,
0 bis 50 Gew.-%, weiter bevorzugt 0,1 bis 39,5 Gew.-%, besonders bevorzugt 0,2 bis 19 Gew.-% weitere polymere Bestandteile und/oder Polymeradditive als Komponente C.

In einer bevorzugten Ausführungsform bestehen die Zusammensetzungen zu mindestens 90 Gew.-% aus den Komponenten A bis C. Am meisten bevorzugt bestehen die Zusammensetzungen nur aus den Komponenten A bis C.

Die Komponente B kann als physikalische Mischkomponente in der Zusammensetzung vorliegen. Es ist auch möglich, dass die Anhydrid-Gruppen der Komponente B mit Polycarbonat (Komponente A) und/oder mit anderen Komponenten der Zusammensetzung chemische Reaktionen eingehen.
Die Anhydrid-Gruppen können auch mit Feuchtigkeit oder anderen Verunreinigungen chemische Reaktionen eingehen.
Solche Reaktionen finden insbesondere in der Schmelze bei hohen Temperaturen, wie sie bei der Schmelzecompoundierung (z.B. in einen Extruder) und bei der Spritzgussverarbeitung herrschen, statt.
Dadurch wird der Anteil von Anhydrid-Gruppen reduziert. Im Rahmen der vorliegenden Patentanmeldung werden auch solche Formmassen als erfindungsgemäß verstanden, wie sie erhalten werden, wenn die Komponenten A, B und optional C physikalisch gemischt und einer Schmelzecompoundierung unterzogen werden.
Dabei ist es auch möglich, dass nicht alle Komponenten der Zusammensetzung gleichzeitig ins das Compoundieraggregat dosiert werden, sonders es kann zum Beispiel auch ein Teil über eine weitere Dosiereinrichtung wie einen Seitenextruder dosiert werden.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben gewichtsgemittelte Molekulargewichte M_{w} bestimmt durch GPC (Gelpermeationschromatographie in Methylenchlorid mit Polycarbonat als Standard) von 15000 g/mol bis 50000 g/mol, bevorzugt von 18000 g/mol bis 35000 g/mol, weiter bevorzugt von 20000 g/mol bis 32000 g/mol, besonders bevorzugt von 23000 g/mol bis 31000 g/mol, ganz besonders bevorzugt von 24000 g/mol bis 31000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 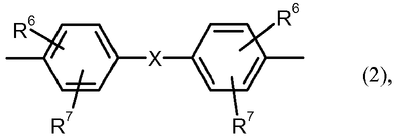 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

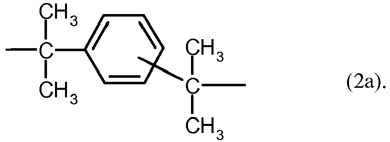

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol(Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

In bevorzugter Ausführungsform wird als Komponente A nur aromatisches Polycarbonat eingesetzt, am meisten bevorzugt ein aromatisches Polycarbonat mit Bisphenol A als Diphenol-Einheit.

### Komponente B

Als Komponente B werden Ethylen -α-Olefin-Copolymere oder Terpolymere mit aufgepfropften Anhydridgruppen eingesetzt. Im Rahmen dieser Patentanmeldung wird die Komponente B auch als Ethylen -α-Olefin-Copolymer oder Terpolymer, das mit Anhydrid Gruppen funktionalisiert ist, bezeichnet.

Das Anhydrid ist vorzugsweise ausgewählt aus der Gruppe, die Maleinsäureanhydrid, Phthalsäureanhydrid, Furmarsäureanhydrid und Itaconsäureanhydrid sowie deren Mischungen umfasst. Besonders bevorzugt ist als Anhydrid Maleinsäureanhydrid.

Die Copolymere oder Terpolymere enthalten neben Ethylen als Comonomer (α-Olefin) vorzugsweise 1- Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen sowie deren Gemische.
Insbesondere wird ein Copolymer aus Ethylen und 1-Octen eingesetzt.

Die Herstellung der olefinischen Copolymere kann wie in US 5272236 A und US 5278272 A beschrieben erfolgen.
Die Pfropfung mit Anhydridgruppen ist beispielsweise in US 323691 A beschrieben.
Der α-Olefin Comonomergehalt beträgt bevorzugt 2 bis 40 Mol-%, weiter bevorzugt 5 bis 35 Mol-% und besonders bevorzugt 10 bis 25 Mol-%, jeweils bezogen auf die Summe von Ethylen und dem Comonomer oder den Comonomeren.
Bei den beschriebenen Ethylen-α-Olefin-Copolymere oder Terpolymere handelt es sich bevorzugt um statistische Copolymere.

Die Copolymere oder Terpolymere mit aufgepfropften Anhydridgruppen können zur Optimierung der elastomeren Eigenschaften einer Anvernetzung wie in WO 98/02489 beschrieben unterzogen werden.

Die Anteile von Ethylen und der Comonomere können durch ¹H und ¹³C NMR Spektroskopie in Trichlorethan als Lösemittel bestimmt werden.

Das anhydridmodifizierte Polymer ist durch nachfolgende Zusammensetzung charakterisiert:
B(1) 90,0 bis 99,99 Gew.-% vorzugsweise 97,0 bis 99,99 Gew.-% besonders bevorzugt 98,0 bis 99,7 Gew-% und ganz besonders bevorzugt 99,0 bis 99,7 Gew.-% Copolymer oder Terpolymer,
B(2) 0,01 bis 10,0 Gew-%, vorzugsweise 0,01 bis 3,0 Gew-% besonders bevorzugt 0,3 bis 2,0 Gew-% und ganz besonders bevorzugt 0,3 bis 1,0 Gew.-%Anhydrid.

In weiter bevorzugter Ausführungsform besteht die Hauptkette der Komponente B aus einem statistischen Copolymer aus Ethylen und 1-Octen Einheiten.

Das anhydridmodifizierte Copolymer hat ein gewichtsgemitteltes Molekulargewicht Mw von größer 50000 bis 500000 g/mol, bevorzugt 100000 bis 400000 g/mol und besonders bevorzugt von 150000 bis 350000 g/mol, jeweils bestimmt durch HT-GPC (Hochtemperatur-Gelpermeationschromatographie) mit ortho-Dichlorbenzol als Lösungsmittel gegen Polystyrol Standards.

Die Glasübergangstemperaturen der bevorzugten Produkte beträgt maximal -50°C oder niedriger. Die Glasübergangstemperatur wird mittels dynamischer Differenzkalorimetrie (DSC) gemäß der Norm DIN EN 61006 (Version von 2004) bei einer Heizrate von 10 K/min mit Definition der T_{g} als Mittelpunkttemperatur (Tangentenmethode) bestimmt.

### Komponente C

Die Zusammensetzung kann als Komponente C ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren polymeren Bestandteilen (beispielsweise Polyestern oder Vinyl(co)polymeren oder funktionellen Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren polymeren Bestandteilen, Farbstoffen und Pigmenten.

In besonders bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren polymeren Bestandteilen, Farbstoffen und Pigmenten und ist frei von weiteren Polymeradditiven.

In bevorzugter Ausführungsform enthält die Zusammensetzung mindestens ein Polymeradditiv ausgewählt aus der Gruppe bestehend aus Gleit-/Entformungsmitteln und Stabilisatoren.

In besonders bevorzugter Ausführungsform enthält die Zusammensetzung mindestens ein Polymeradditiv ausgewählt aus der Gruppe bestehend aus Gleit-/Entformungsmitteln und Stabilisatoren und ist frei von weiteren Polymeradditiven.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Besonders bevorzugte Zusammensetzungen enthalten als Entformungsmittel Pentaerythrittetrastearat, als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie optional eine Brönstedt-Säure und sind frei von weiteren Polymeradditiven.

Weiter bevorzugte Zusammensetzungen enthalten als Entformungsmittel Pentaerythrittetrastearat, als Stabilisator eine Kombination aus Octadecyl 3-(3,5-di-tert-butyl-4-hydroxyphenyl)propionat und Tris(2,4-di-tert-butylphenyl)phosphit, optional eine Brönstedt-Säure und sind frei von weiteren Polymeradditiven.

### Herstellung der Formmassen und Formkörper

Aus den erfindungsgemäßen Zusammensetzungen können thermoplastische Formmassen hergestellt werden.
Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 340°C, besonders bevorzugt bei 240 bis 320°C und ganz besonders bevorzugt 240°C bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Dabei wird zumindest die Komponente A aufgeschmolzen, alle Bestandteile der Zusammensetzung ineinander dispergiert und/oder gelöst und in einem weiteren Schritt die erhaltene Schmelze durch Abkühlen wieder verfestigt und optional granuliert. Es ist möglich, die Schritte der Verfestigung und Granulierung in beliebiger Reihenfolge zueinander durchzuführen.
Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 32 der vorliegenden Erfindung beschrieben:
1. Zusammensetzungen zur Erzeugung von thermoplastischen Formmassen, wobei die Zusammensetzungen folgende Bestandteile enthalten
   A) Mindestens ein Polymer ausgewählt aus der Gruppe bestehend aus aromatischem Polycarbonat, aromatischem Polyestercarbonat oder Polyester
   B) mindestens ein mit einem Anhydrid funktionalisiertes Ethylen-α-Olefin-Copolymer oder Ethylen-α-Olefin Terpolymer,
      wobei die Komponente B ein mittleres Molekulargewicht Mw von 50000 bis 500000 g/mol aufweist.
2. Zusammensetzungen gemäß Ausführungsform 1, wobei die Komponente A ein gewichtsgemitteltes Molekulargewicht Mw von 18000 g/mol bis 35000 g/mol aufweist.
3. Zusammensetzungen gemäß Ausführungsform 1, wobei die Komponente A ein gewichtsgemitteltes Molekulargewicht Mw von 20000 bis 32000 g/mol aufweist.
4. Zusammensetzungen gemäß Ausführungsform 1, wobei die Komponente A ein gewichtsgemitteltes Molekulargewicht Mw von 24000 bis 31000 g/mol aufweist.
5. Zusammensetzungen gemäß einer der vorherigen Ausführungsformen, wobei die Komponente B 2 bis 40 Mol-% α-Olefin -Einheiten und 60 bis 98 Mol-% Ethylen-Einheiten bezogen auf die Summe von α-Olefin und Ethylen aufweist.
6. Zusammensetzungen gemäß einer der vorherigen Ausführungsformen, wobei die Komponente B 5 bis 35 Mol-% α-Olefin -Einheiten und 65 bis 95 Mol-% Ethylen-Einheiten bezogen auf die Summe von α-Olefin und Ethylen aufweist.
7. Zusammensetzungen gemäß einer der vorherigen Ausführungsformen, wobei die Komponente B 10 bis 25 Mol-% α-Olefin -Einheiten und 75 bis 90 Mol-% Ethylen-Einheiten bezogen auf die Summe von α-Olefin und Ethylen aufweist.
8. Zusammensetzungen gemäß einer der vorherigen Ausführungsformen, wobei das Anhydrid in Komponente B ausgewählt ist aus der Gruppe, die Maleinsäureanhydrid, Phthalsäureanhydrid, Furmarsäureanhydrid und Itaconsäureanhydrid sowie deren Mischungen umfasst.
9. Zusammensetzungen gemäß einer der vorherigen Ausführungsformen, wobei das Anhydrid in Komponente B Maleinsäureanhydrid ist
10. Zusammensetzungen gemäß einer der vorherigen Ausführungsformen, wobei die Komponente B einen Gehalt an Anhydrid von 0,01 bis 10,0 Gew.-% aufweist.
11. Zusammensetzungen gemäß einer der vorherigen Ausführungsformen, wobei die Komponente B einen Gehalt an Anhydrid von 0,01 bis 3,0 Gew.-% aufweist.
12. Zusammensetzungen gemäß einer der vorherigen Ausführungsformen, wobei die Komponente B einen Gehalt an Anhydrid von 0,3 bis 2,0 Gew.-% aufweist.
13. Zusammensetzungen gemäß einer der vorherigen Ausführungsformen, wobei die Komponente B einen Gehalt an Anhydrid von 0,3 bis 1,0 Gew.-% aufweist.
14. Zusammensetzungen gemäß einer der vorherigen Ausführungsformen, wobei das α-Olefin in Komponente B ausgewählt ist aus der Gruppe, die 1- Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen sowie deren Gemische umfasst
15. Zusammensetzungen gemäß einer der vorherigen Ausführungsformen, wobei die Komponente B ein mit Maleinsäureanhydrid funktionalisiertes Copolymer aus Ethylen und 1-Octen ist.
16. Zusammensetzungen einer der vorherigen Ausführungsformen, wobei die Komponente B ein gewichtsgemitteltes Molekulargewicht Mw von 100000 bis 400000 g/mol aufweist.
17. Zusammensetzungen einer der vorherigen Ausführungsformen, wobei die Komponente B ein gewichtsgemitteltes Molekulargewicht Mw von 150000 bis 350000 g/mol aufweist.
18. Zusammensetzungen gemäß einer der vorherigen Ausführungsformen, wobei die Komponente A nur aus aromatischem Polycarbonat besteht.
19. Zusammensetzungen gemäß einer der vorherigen Ausführungsformen, enthaltend 0,1 bis 10 Gew.-% der Komponente B.
20. Zusammensetzungen gemäß einer der vorherigen Ausführungsformen, enthaltend
   40 bis 99,9 Gew.-% der Komponente A,
   0,1 bis 10 Gew.-% der Komponente B,
   0 bis 50 Gew.-% weitere polymere Bestandteile und/oder Polymeradditive als Komponente C.
21. Zusammensetzungen gemäß einer der vorherigen Ausführungsformen, enthaltend
   60 bis 99,4 Gew.-% der Komponente A,
   0,5 bis 9 Gew.-% der Komponente B,
   0,1 bis 39,5 Gew.-% weitere polymere Bestandteile und/oder Polymeradditive als Komponente C.
22. Zusammensetzungen gemäß einer der vorherigen Ausführungsformen, enthaltend
   80 bis 98,8 Gew.-% der Komponente A,
   1 bis 8 Gew.-% der Komponente B,
   0,2 bis 19 Gew.-% weitere polymere Bestandteile und/oder Polymeradditive als Komponente C.
23. Zusammensetzungen gemäß einer der vorherigen Ausführungsformen, wobei die Komponente C mindestens einen Stabilisator ausgewählt aus der Gruppe der phenolischen Antioxidantien und Phosphite umfasst.
24. Zusammensetzungen gemäß einer der vorherigen Ausführungsformen, wobei die Komponente C eine Mischung aus mindestens einem phenolischem Antioxidanz und mindestens einem Phosphit umfasst.
25. Zusammensetzungen gemäß einer der vorherigen Ausführungsformen, bestehend zu mindestens 90 Gew.-% aus den Komponenten A bis C.
26. Zusammensetzungen gemäß einer der vorherigen Ausführungsformen, bestehend aus den Komponenten A bis C.
27. Verfahren zur Herstellung von Formmassen, enthaltend die Schritte (i), (ii) und optional (iii), wobei in einem ersten Schritt (i)
   Zusammensetzungen gemäß einer der Ausführungsformen 1 bis 26
   durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
   und
   in einem weiteren Schritt (ii)
   die aus Verfahrensschritt (i) resultierende Schmelze (ii) durch Abkühlen wieder verfestigt und (iii) optional granuliert wird,
   wobei die Verfahrensschritte (ii) und (iii) in beliebiger Reihenfolge zueinander durchgeführt werden können.
28. Verfahren gemäß Ausführungsform 27, wobei der Schritt (i) bei einer Temperatur von 200°C bis 320°C durchgeführt wird.
29. Verfahren gemäß Ausführungsform 27, wobei der Schritt (i) bei einer Temperatur von 240°C bis 300°C durchgeführt wird.
30. Formmassen, erhalten oder erhältlich nach einem Verfahren nach Ausführungsform 27 bis 29.
31. Verwendung von Zusammensetzungen gemäß einer der vorherigen Ausführungsformen 1 bis 26 oder einer Formmasse gemäß Ausführungsform 30 zur Herstellung von Formkörpern.
32. Formkörper enthaltend Zusammensetzungen gemäß einer der Ausführungsformen 1 bis 26 oder eine Formmasse gemäß Ausführungsform 30.

### Beispiele

### Eingesetzte Komponenten

### Komponente A:

A1: Lineares Polycarbonat auf Basis Bisphenol-A mit einem gewichtsgemittelten Molekulargewicht M_{W} von 28000 g/mol bestimmt durch Gelpermeationschromatographie in Methylenchlorid mit Polycarbonat als Standard.
A2: Lineares Polycarbonat auf Basis Bisphenol-A mit einem gewichtsgemittelten Molekulargewicht M_{W} von 24000 g/mol bestimmt durch Gelpermeationschromatographie in Methylenchlorid mit Polycarbonat als Standard.

### Komponente B:

B1: Maleinsäureanhydrid (MAH) funktionalisiertes Ethylen 1-Octen Copolymer mit einem MAH Gehalt von 0,8 Gew-% und einem Verhältnis von Ethylen zu 1-Octen von 87 zu 13 Mol.-% sowie einem gewichtsgemittelten Molekulargewicht M_{W} von 200000 g/mol (Paraloid™ EXL 3808 D, Hersteller Dow Chemical).
B2: Maleinsäureanhydrid (MAH) funktionalisiertes Ethylen 1-Octen Copolymer mit einem MAH Gehalt von 0,4 Gew-% und einem Verhältnis von Ethylen zu 1-Octen von 83 zu 17 Mol.-% sowie einem gewichtsgemittelten Molekulargewicht M_{W} von 322000 g/mol (Paraloid™ EXL 3815, Hersteller Dow Chemical).
B3: Maleinsäureanhydrid (MAH) funktionalisiertes Ethylen 1-Octen Copolymer mit einem MAH Gehalt von 1,55 Gew-% und einem Verhältnis von Ethylen zu 1-Octen von 67 zu 33 Mol.-% sowie einem gewichtsgemittelten Molekulargewicht M_{W} von 166000 g/mol (Scona™ TSPOE 1002 GBLL, Hersteller Byk Chemie).
B4:Maleinsäureanhydrid (MAH) funktionalisiertes Ethylen 1-Octen Copolymer mit einem MAH Gehalt von 0,55 Gew-% und einem Verhältnis von Ethylen zu 1-Octen von 70 zu 30 Mol.-% sowie einem gewichtsgemittelten Molekulargewicht M_{W} von 285000 g/mol (Scona™ TSPOE 1002 CMB 1-2, Hersteller Byk Chemie).
B5 (Vergleich): Schlagzähmodifikator mit Kern-Schale Struktur und einem Silikon-Acrylat Kompositkautschuk als Kern (Metabien™ S2001, Hersteller Mitsubishi Rayon)
B6 (Vergleich): Schlagzähmodifikator mit Kern-Schale Struktur und einem Acrylatkautschuk als Kern (Paraloid™ EXL 2300, Hersteller Dow Chemical)
B7 (Vergleich): Schlagzähmodifikator mit Kern-Schale Struktur und einem Butadienkautschuk als Kern (Kane ACE™ M732, Hersteller Kaneka).
B8 (Vergleich): Ethylen-Propylen-Octen-Maleinsäureanhydrid-Copolymer mit einem Verhältnis Ethylen : Propylen : Octen 87:6:7 in Gew.-% (entspricht 94:4:2 in Mol.-%), CAS-Nr. 31069-12-2, mit einem Molekulargewicht Mw 5000 g/mol bestimmt durch GPC mit Polystyrol als Standard und einem Maleinsäureanhydridanteil 4,4% Gew.-% , HiWax™ 1105 A (Hersteller Mitsui Chemicals).

### Komponente C:

C1: : Thermostabilisator, Irganox™ B900 (Gemisch aus 80% Irgafos™ 168 (Tris(2,4-di-tert-butylphenyl)-phosphit) und 20% Irganox™ 1076 (2,6-Di-tert-butyl-4-(octadecanoxycarbonylethyl)-phenol); BASF (Ludwigshafen, Deutschland).
C2: Entformungsmittel Pentaerythrittetrastearat

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 300°C. Die Formkörper wurden bei einer Massetemperatur von 300°C und einer Werkzeugtemperatur von 80°C auf einer Spritzgießmaschine Typ Arburg 270 E hergestellt.

Der MVR wird bestimmt gemäß ISO 1133 (Version von 2012) bei 300°C unter Verwendung einer Stempellast von 1,2 kg und einer Aufschmelzzeit von 5 Minuten.

Als Maß für die Chemikalienbeständigkeit dient die Spannungsriss-(ESC)-Beständigkeit in Rapsöl und Sonnencreme mit Lichtschutzfaktor 50 (Nivea™ SUN 50+) sowie von Hand + Nagel Balsam (Sebamed™) bei Raumtemperatur. Bestimmt wird die Zeit bis zum spannungsrissinduzierten Bruchversagen eines bei 300°C Massetemperatur abgespritzten Prüfkörpers der Abmessung 80 mm x 10 mm x 4 mm, der mittels einer Spannschablone mit einer externen Randfaserdehnung von 2,0% beaufschlagt und im Medium vollständig eingetaucht wird. Es wird folgendes Bewertungsschema verwendet:

| Zeit bis Bruchversagen | Bewertung |
|---|---|
| < 1Tag | --- |
| 1-2 Tage | -- |
| 2-3 Tage | - |
| 3-4 Tage | 0 |
| 4-5 Tage | + |
| 5-6 Tage | ++ |
| 6-7 Tage | +++ |

Die Kerbschlagzähigkeit nach Charpy wurde bei verschiedenen Temperaturen (von 23°C bis zu - 50°C) gemäß ISO 179/1eA (Version von 2010) jeweils zehn Prüfkörpern der Abmessung 80 mm x 10 mm x 4mm bestimmt. Als zähes Bruchverhalten wurden Kerbschlagzähigkeitseinzelwerte ≥30 kJ/m² gewertet. Es wird jeweils der Mittelwert aus den Einzelwerten ≥ 30 kJ/m² und < 30 kJ/m² angegeben.

Der Vicat B/120 als Maß für die Wärmeformbeständigkeit wurde bestimmt gemäß ISO 306 (Version von 2013) an Prüfkörpern der Abmessung 80 mm x 10 mm x 4mm mit einer Stempellast von 50 N und einer Aufheizgeschwindigkeit von 120°C/h.

Die Schmelzeviskositäten wurden gemäß ISO 11443 (Version von 2014) bei 280 bzw. 300 °C, in beiden Fällen bei einer Scherrate von 1000 s⁻¹, ermittelt.

**Tabelle 1: Zusammensetzungen und ihre Eigenschaften**

| Komponente (Gew. Teile) | | 1 | 2 Vgl. | 3 Vgl. | 4 Vgl. | 5 Vgl. |
|---|---|---|---|---|---|---|
| A1 | | 94,5 | 94,35 | 94,35 | 94,5 | 94,5 |
| B1 | | 5,00 | | | | |
| B5 | | | 5,00 | | | |
| B6 | | | | 5,00 | | |
| B7 | | | | | 5,00 | |
| B8 | | | | | | 5,00 |
| C1 | | 0,10 | 0,25 | 0,25 | 0,10 | 0,10 |
| C2 | | 0,40 | 0,40 | 0,40 | 0,40 | 0,40 |

| Eigenschaften | Einheit | | | | | |
|---|---|---|---|---|---|---|
| Charpy Kerbschlagzähigkeit (23°C) | kJ/m² | 70 | 67 | 67 | 62 | 53 |
| Charpy Kerbschlagzähigkeit (-20°C) | kJ/m² | 69 | 63 | 62 | 61 | 26 |
| VICAT | °C | 142 | 140 | 140,8 | 141,3 | |
| | | | | | | |
| Schmelzeviskosität (280°C) | Pa·s bei 1000 s⁻¹ | 306 | 398 | 409 | 434 | 70 |
| Schmelzeviskosität (300°C) | Pa·s bei 1000 s⁻¹ | 211 | 258 | 247 | 283 | 42 |
| MVR (1,2kg - 5min, 300°C) | cm3/[10min] | 9,2 | 8,3 | 8,6 | 7,8 | 21 |
| Chemikalienbeständigkeit | | | | | | |
| Sonnen creme | Bewertung | +++ | - | - | --- | --- |
| Hand + Nagel Balsam | Bewertung | + + | - | + + + | - | |
| Rapsöl | Bewertung | 0 | --- | --- | - - | |

Die Beispiele in Tabelle 1 zeigen, dass sich die Zusammensetzung gemäß Versuch 1 mit der erfindungsgemäßen Komponente B1 durch eine verbesserte Kombination aus sehr guter Kerbschlagzähigkeit, hoher Wärmeformbeständigkeit und sehr guter Schmelzefließfähigkeit sowie auszeichnen. Darüber hinaus weist die Zusammensetzung aus Versuch 1 eine deutlich verbesserte Chemikalienbeständigkeit auf. Mit den vergleichsweise eingesetzten Schlagzähigkeitsmodifikatoren vom Kern-Schale Typ B5, B6 und B7 werden bei gleichen Einsatzkonzentrationen etwas geringere Kerbschlagzähigkeiten und Wärmeformbeständigkeiten bei deutlich schlechteren Fließfähigkeiten und Chemikalienbeständigkeiten erhalten. Bei Verwendung des nicht erfindungsgemäßen Ethylen-Propylen-Octen-Maleinsäureanhydrid-Copolymers B8 sind die Kerbschlagzähigkeit und die Chemikalienbeständigkeit unzureichend.

**Tabelle 2: Zusammensetzungen und ihre Eigenschaften**

| Einsatzstoff (Gew.-Teile) | | 6 | 7 | 8 | 9 | 10 | 11 | 12 | 13 | 14 | 15 | 16 | 17 | 18 |
|---|---|---|---|---|---|---|---|---|---|---|---|---|---|---|
| A2 | | 99,4 | 95,6 | 91,6 | 91,35 | 95,6 | 91,6 | 91,35 | 95,6 | 91,6 | 91,35 | 95,6 | 91,6 | 91,35 |
| B1 | | | 4 | 8 | 8 | | | | | | | | | |
| B2 | | | | | | 4 | 8 | 8 | | | | | | |
| B3 | | | | | | | | | 4 | 8 | 8 | | | |
| B4 | | | | | | | | | | | | 4 | 8 | 8 |
| C1 | | | | | 0,25 | | | 0,25 | | | 0,25 | | | 0,25 |
| C2 | | 0,4 | 0,4 | 0,4 | 0,4 | 0,4 | 0,4 | 0,4 | 0,4 | 0,4 | 0,4 | 0,4 | 0,4 | 0,4 |
| Charpy-Kerbschlag | Temp. | | | | | | | | | | | | | |
| Anzahl zäh/spröd | 23 °C | 10/0 | 10/0 | 10/0 | 10/0 | 10/0 | 10/0 | 10/0 | 10/0 | 10/0 | 10/0 | 10/0 | 10/0 | 10/0 |
| Mittelwert zäh/spröd (kJ/m²) | 23 °C | 65/0 | 62/0 | 59/0 | 63/0 | 62/0 | 59/0 | 61/0 | 61/0 | 53/0 | 60/0 | 60/0 | 56/0 | 60/0 |
| Anzahl zäh/spröd | 10 °C | | | | | | | | | 10/0 | | | | |
| Mittelwert zäh/spröd (kJ/m²) | 10 °C | | | | | | | | | 37/0 | | | | |
| Anzahl zäh/spröd | 0 °C | | 10/0 | 10/0 | | 10/0 | | | 10/0 | 6/4 | 10/0 | 10/0 | 10/0 | |
| Mittelwert zäh/spröd (kJ/m²) | 0 °C | | 34/0 | 40/0 | | 45/0 | | | 34/0 | 32/29 | 53/0 | 34/0 | 40/0 | |
| Anzahl zäh/spröd | -10 °C | 0/10 | 0/10 | 4/6 | | 2/8 | 10/0 | | 0/10 | 0/10 | 10/0 | 0/10 | 7/3 | 10/0 |
| Mittelwert zäh/spröd (kJ/m²) | -10 °C | 0/16 | 0/24 | 31/26 | | 32/26 | 38/0 | | 0/23 | 0/22 | 33/0 | 0/24 | 34/27 | 43/0 |
| Anzahl zäh/spröd | -20 °C | | 0/10 | 0/10 | 10/0 | 0/10 | 4/6 | 10/0 | 0/10 | 0/10 | 0/10 | 0/10 | 0/10 | 6/4 |
| Mittelwert zäh/spröd (kJ/m²) | -20 °C | | 0/19 | 0/21 | 61/0 | 0/22 | 32/27 | 63/0 | 0/18 | 0/18 | 0/23 | 0/18 | 0/23 | 31/28 |
| Anzahl zäh/spröd | -30 °C | | | | 10/0 | | 0/10 | 10/0 | | | | | | 0/10 |
| Mittelwert zäh/spröd (kJ/m²) | -30 °C | | | | 32/0 | | 0/21 | 48/0 | | | | | | 0/20 |
| VICAT (°C) | | 144,3 | 144,1 | 142,9 | 142,9 | 143,7 | 143 | 142,7 | 144,1 | 142,8 | 142,2 | 144,3 | 142,4 | 142,4 |
| Schmelzeviskosität (Pa·s bei 1000 s-1) | 280 °C | 321 | 271 | 242 | 228 | 246 | 231 | 240 | 296 | 277 | 252 | 283 | 264 | 256 |
| Schmelzeviskosität (Pa·s bei 1000 s-1) | 300 °C | 192 | 174 | 150 | 164 | 170 | 157 | 170 | 180 | 176 | 174 | 183 | 173 | 180 |
| MVR (1,2 kg-5 Min/ 300°C) | | 19,7 | 18,3 | 16,5 | 19,7 | 18,2 | 17,5 | 18,6 | 17,5 | 15,7 | 16,8 | 17,5 | 15,7 | 16,8 |

Die Daten aus Tabelle 2 zeigen den Einfluss der Einsatzkonzentration der erfindungsgemäßen Komponente B auf die Zähigkeit, Wärmeformbeständigkeit und Fließfähigkeit. Es wird zudem ersichtlich, dass bei einem 1-Octen Anteil zwischen 10 und 25 Mol.-%, d.h. mit den Einsatzstoffen B1 und B2, besonders gute Zähigkeiten erreicht werden können. Zudem lässt sich die Zähigkeit durch den Einsatz einer Stabilisatormischung aus phenolischen Antioxidanz und Phosphitstabilisator noch weiter verbessern.

## Patentansprüche

1. Zusammensetzungen zur Erzeugung von thermoplastischen Formmassen, wobei die Zusammensetzungen folgende Bestandteile enthalten
A) Mindestens ein Polymer ausgewählt aus der Gruppe bestehend aus aromatischem Polycarbonat, aromatischem Polyestercarbonat und Polyester
B) mindestens ein mit einem Anhydrid funktionalisiertes Ethylen-α-Olefin-Copolymer oder Ethylen-α-Olefin Terpolymer,
wobei die Komponente B ein gewichtsgemitteltes Molekulargewicht Mw von 50000 bis 500000 g/mol bestimmt durch Hochtemperatur- Gelpermeationschromatographie mit ortho-Dichlorbenzol als Lösungsmittel gegen Polystyrol Standards aufweist.

2. Zusammensetzungen gemäß Anspruch 1, wobei die Komponente B 2 bis 40 Mol.-% α-Olefin - Einheiten und 60 bis 98 Mol.-% Ethylen-Einheiten bezogen auf die Summe von α-Olefin und Ethylen aufweist.

3. Zusammensetzungen gemäß einem der vorherigen Ansprüche, wobei die Komponente B einen Gehalt an Anhydrid von 0,01 bis 3,0 Gew.-% aufweist.

4. Zusammensetzungen gemäß einem der vorherigen Ansprüche, wobei die Komponente B ein mit Maleinsäureanhydrid funktionalisiertes Copolymer aus Ethylen und 1-Octen ist.

5. Zusammensetzungen gemäß einem der vorherigen Ansprüche, wobei die Komponente B ein gewichtsgemitteltes Molekulargewicht Mw von 100000 bis 400000 g/mol aufweist.

6. Zusammensetzungen gemäß einem der vorherigen Ansprüche, wobei die Komponente B 10 bis 25 Mol.-% 1-Octen-Einheiten und 75 bis 90 Mol.-% Ethylen-Einheiten bezogen auf die Summe von 1-Octen und Ethylen aufweist.

7. Zusammensetzungen gemäß einem der vorherigen Ansprüche, wobei die Komponente B einen Gehalt an Anhydrid von 0,3 bis 2,0 Gew.-% aufweist.

8. Zusammensetzungen gemäß einem der vorherigen Ansprüche, wobei die Komponente A nur aus aromatischem Polycarbonat besteht.

9. Zusammensetzungen gemäß einem der vorherigen Ansprüche, enthaltend 0,1 bis 10 Gew.-% der Komponente B.

10. Zusammensetzungen gemäß einem der vorherigen Ansprüche, enthaltend
40 bis 99,9 Gew.-% der Komponente A,
0,1 bis 10 Gew.-% der Komponente B,
0 bis 50 Gew.-% weitere polymere Bestandteile und/oder Polymeradditive als Komponente C.

11. Zusammensetzungen gemäß einem der vorherigen Ansprüche, wobei die Komponente C eine Mischung aus mindestens einem phenolischem Antioxidanz und mindestens einem Phosphit umfasst.

12. Verfahren zur Herstellung von Formmassen, enthaltend die Schritte (i), (ii) und optional (iii), wobei in einem ersten Schritt (i)
Zusammensetzungen gemäß einem der Ansprüche 1 bis 12
durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
und
in einem weiteren Schritt (ii)
die aus Verfahrensschritt (i) resultierende Schmelze (ii) durch Abkühlen wieder verfestigt und (iii) optional granuliert wird,
wobei die Verfahrensschritte (ii) und (iii) in beliebiger Reihenfolge zueinander durchgeführt werden können.

13. Formmassen, erhalten oder erhältlich nach einem Verfahren nach Anspruch 12.

14. Verwendung von Zusammensetzungen gemäß einem der Ansprüche 1 bis 11 oder Formmassen gemäß Anspruch 13 zur Herstellung von Formkörpern.

15. Formkörper enthaltend Zusammensetzungen gemäß einem der Ansprüche 1 bis 11 oder Formmassen gemäß Anspruch 13.

## Claims

1. Compositions for the production of thermoplastic moulding materials, where the compositions comprise the following constituents:
A) at least one polymer selected from the group consisting of aromatic polycarbonate, aromatic polyester carbonate and polyester,
B) at least one anhydride-functionalized ethylene-α-olefin-copolymer or ethylene-α-olefin terpolymer,
where the weight-average molar mass Mw of component B, determined by high-temperature gel permeation chromatography using ortho-dichlorobenzene as solvent against polystyrene standards is from 50 000 to 500 000 g/mol.

2. Compositions according to Claim 1, where component B has from 2 to 40 mol% of α-olefin units and from 60 to 98 mol% of ethylene units, based on the entirety of α-olefin and ethylene.

3. Compositions according to either of the preceding claims, where the anhydride content of component B is from 0.01 to 3.0% by weight.

4. Compositions according to any of the preceding claims, where component B is a maleic-anhydride-functionalized copolymer of ethylene and 1-octene.

5. Compositions according to any of the preceding claims, where the weight-average molar mass Mw of component B is from 100 000 to 400 000 g/mol.

6. Compositions according to any of the preceding claims, where component B has from 10 to 25 mol% of 1-octene units and from 75 to 90 mol% of ethylene units, based on the entirety of 1-octene and ethylene.

7. Compositions according to any of the preceding claims, where the anhydride content of component B is from 0.3 to 2.0% by weight.

8. Compositions according to any of the preceding claims, where component A consists only of aromatic polycarbonate.

9. Compositions according to any of the preceding claims, comprising from 0.1% to 10% by weight of component B.

10. Compositions according to any of the preceding claims, comprising
from 40 to 99.9% by weight of component A,
from 0.1 to 10% by weight of component B,
from 0 to 50% by weight of other polymeric constituents and/or polymer additives as component C.

11. Compositions according to any of the preceding claims, where component C comprises a mixture of at least one phenolic antioxidant and of at least one phosphite.

12. Process for the production of moulding materials, comprising the steps (i), (ii) and optionally (iii), where, in a first step (i)
compositions according to any of Claims 1 to 12 are heated via introduction of thermal and/or mechanical energy, at least component A) is thus melted, and all of the components used are dispersed and/or dissolved in one another,
and
in a further step (ii)
the melt (ii) resulting from process step (i) is solidified again by cooling
and (iii) optionally pelletized,
where the process steps (ii) and (iii) can be carried out in any desired order.

13. Moulding materials obtained or obtainable by a process according to Claim 12.

14. Use of compositions according to any of Claims 1 to 11 or moulding materials according to Claim 13 for the production of mouldings.

15. Mouldings comprising compositions according to any of Claims 1 to 11 or moulding materials according to Claim 13.

## Revendications

1. Compositions pour la formation de matériaux de moulage thermoplastiques, les compositions contenant les constituants suivants :
A) au moins un polymère choisi dans le groupe constitué par le polycarbonate aromatique, le polyester-carbonate aromatique et le polyester,
B) au moins un copolymère d'éthylène-α-oléfine ou terpolymère d'éthylène-α-oléfine fonctionnalisé avec un anhydride,
le composant B présentant un poids moléculaire moyen en poids Mw de 50 000 à 500 000 g/mol déterminé par chromatographie per perméation de gel à haute température avec de l'ortho-dichlorobenzène en tant que solvant contre un étalon polystyrène.

2. Compositions selon la revendication 1, dans lesquelles le composant B comprend 2 à 40 % en moles d'unités α-oléfine et 60 à 98 % en moles d'unités éthylène par rapport à la somme de l'α-oléfine et de l'éthylène.

3. Compositions selon l'une quelconque des revendications précédentes, dans lesquelles le composant B présente une teneur en anhydride de 0,01 à 3,0 % en poids.

4. Compositions selon l'une quelconque des revendications précédentes, dans lesquelles le composant B est un copolymère d'éthylène et de 1-octène fonctionnalisé avec de l'anhydride de l'acide maléique.

5. Compositions selon l'une quelconque des revendications précédentes, dans lesquelles le composant B présente un poids moléculaire moyen en poids Mw de 100 000 à 400 000 g/mol.

6. Compositions selon l'une quelconque des revendications précédentes, dans lesquelles le composant B comprend 10 à 25 % en moles d'unités 1-octène et 75 à 90 % en moles d'unités éthylène, par rapport à la somme du 1-octène et de l'éthylène.

7. Compositions selon l'une quelconque des revendications précédentes, dans lesquelles le composant B présente une teneur en anhydride de 0,3 à 2,0 % en poids.

8. Compositions selon l'une quelconque des revendications précédentes, dans lesquelles le composant A n'est constitué que par du polycarbonate aromatique.

9. Compositions selon l'une quelconque des revendications précédentes, contenant 0,1 à 10 % en poids du composant B.

10. Compositions selon l'une quelconque des revendications précédentes, contenant :
40 à 99,9 % en poids du composant A,
0,1 à 10 % en poids du composant B,
0 à 50 % en poids de constituants polymères et/ou additifs polymères supplémentaires en tant que composant C.

11. Compositions selon l'une quelconque des revendications précédentes, dans lesquelles le composant C comprend un mélange d'au moins un antioxydant phénolique et d'au moins un phosphite.

12. Procédé de fabrication de matériaux de moulage, contenant les étapes (i), (ii) et éventuellement (iii), dans lequel, dans une première étape (i),
des compositions selon l'une quelconque des revendications 1 à 12
sont chauffées par apport d'énergie thermique et/ou mécanique, au moins le composant A) est ainsi fondu et tous les composants utilisés sont dispersés et/ou dissous les uns dans les autres,
et,
dans une étape supplémentaire (ii),
la masse fondue (ii) résultant de l'étape de procédé (i) est de nouveau solidifiée par refroidissement et (iii) éventuellement granulée,
les étapes de procédé (ii) et (iii) pouvant être réalisées dans un ordre quelconque l'une par rapport à l'autre.

13. Matériaux de moulage, obtenus ou pouvant être obtenus par un procédé selon la revendication 12.

14. Utilisation de compositions selon l'une quelconque des revendications 1 à 11 ou de matériaux de moulage selon la revendication 13 pour la fabrication de corps moulés.

15. Corps moulés contenant des compositions selon l'une quelconque des revendications 1 à 11 ou des matériaux de moulage selon la revendication 13.
